# EUROPÄISCHE PATENTANMELDUNG

(11) **EP 0 537 480 A2**
(43) Veröffentlichungstag der Anmeldung: **21.04.1993**
(21) Anmeldenummer: 92115602.2
(22) Anmeldetag: 11.09.1992
(51) Int. Cl.: H01R 13/658, H01R 4/72

(54) **Abschirmüberbrückung und Verfahren zu deren Montage**

(30) Priorität: 18.10.1991 DE 4134548
(71) Anmelder: DSG Schrumpfschlauch GmbH, D-53340 Meckenheim (DE)
(72) Erfinder: Arenz, Helmut, W-5305 ALfter-Impekoven (DE)
(74) Vertreter: Grünecker, Kinkeldey, Stockmair & Schwanhäusser Anwaltssozietät

(57) **Zusammenfassung**

2.1 Bei herkömmlichen Kabel-Verbinder-Verbindungen ist der unmittelbar an den Verbinder angrenzende Kabelabschnitt über eine undefinierte Länge nicht abgeschirmt. Die neue Abschirmungsüberbrückung soll verhindern, daß sich dicht aneinandergeordnete einzelne Kabel-Verbinder-Verbindungen elektronisch beeinflussen.

2.2 Der nicht abgeschirmte Kabelendabschnitt (4) wird über seine gesamte Länge mit einem 360^{o} abschirmenden Metallgeflecht umgeben. Die Montage der Abschirmungsüberbrückung wird folgendermaßen durchgeführt:
- Zerschneiden eines Metallgeflechts;
- Umhüllen des nicht abgeschirmten Kabelabschnittes (4) mit dem als Abschirmungsüberbrückung (6) dienenden Geflechts;
- Umgeben des Geflechts mit schrumpffähigem Schlauch (7); und
- Rückschrumpfen des schrumpffähigen Schlauches.

2.3 Die neue Abschirmungsüberbrückung ermöglicht es, nach dem Konfektionieren einer Kabel-Stecker-Verbindung die nicht abgeschirmten Kabelabschnitte problemlos elektrisch abzuschirmen.

## Beschreibung

Die Erfindung betrifft eine Abschirmungsüberbrückung für nicht abgeschirmte Kabelendabschnitte einer Kabel-Verbinder-Verbindung, wie einer Kabel-Stecker-Verbindung und ein Verfahren zum Aufbringen dieser Abschirmungsüberbrückung auf die nicht abgeschirmten Kabelendabschnitte.

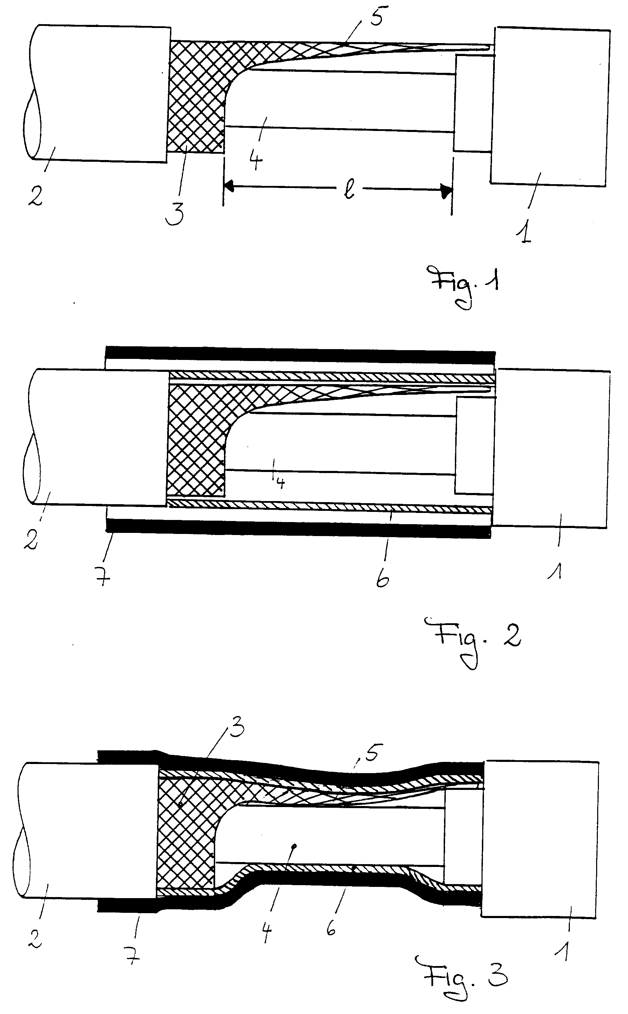

In Fig. 1 ist eine herkömmliche Kabel-Stecker-Verbindung dargestellt. Dabei ist es üblich, daß der an den Stecker 1 unmittelbar angrenzende Kabelabschnitt 4 über eine Länge 1 nicht abgeschirmt ist. Für die zulässige Länge dieses nicht abgeschirmten Abschnittes gab es bisher keine Beschränkungen, so daß diese unabgeschirmten Längen bisweilen 200 mm oder mehr betrugen.

Durch den Trend der Industrie aus Platzersparnisgründen immer kompakter zu bauen, werden häufig Kabelbäume verwendet, so daß eine Vielzahl solcher Kabel-Stecker-Verbindungen dicht aneinander angeordnet sind. Folglich treten bedingt durch die nicht abgeschirmten Kabelabschnitte vermehrt elektronische Beeinflussungen der einzelnen Kabel untereinander auf.

Um diese elektronischen Störungen zu vermeiden, wird jetzt von Kabelbaumabnehmern wie der Automobilindustrie eine Beschränkung der Länge 1 des nicht abgeschirmten Abschnittes auf nicht mehr als 5 mm gefordert.

Die Aufgabe der vorliegenden Erfindung ist es, eine Abschirmungsüberbrückung für nicht abgeschirmte Kabelendabschnitte einer Kabel-Verbinder-Verbindung, wie einer Kabel-Stecker-Verbindung sowie ein Verfahren zum Aufbringen dieser Abschirmungsüberbrückung auf die nicht abgeschirmten Kabelendabschnitt zur Verfügung zu stellen.

Diese Aufgabe wird hinsichtlich der Abschirmungsüberbrückung erfindungsgemäß dadurch gelöst, daß der nicht abgeschirmte Kabelendabschnitt über seine gesamte Länge mit einem elektrisch 360^{o} abschirmenden Metallgeflecht umgeben ist.

Gemäß einer bevorzugten Ausführungsform der Erfindung besteht das Metallgeflecht aus einem bandförmigen Kupfergeflecht, dessen Längskanten miteinander verbunden sind.

Eine andere Ausführungsform der Erfindung sieht vor, daß die Längskanten mit Hilfe eines auf wenigstens einer Längskante einseitig aufgetragenen klebenden Fixiermittels, wie Butylkautschuk, verbunden sind.

Ferner kann vorgesehen sein, daß die Abschirmungsüberbrückung und der angrenzende abgeschirmte Kabelabschnitt von einem aufgeschrumpften Schlauchmaterial umgeben sind.

Die vorstehend genannte Aufgabe wird hinsichtlich des Verfahrens durch den Gegenstand des Anspruches 5 gelöst.

Gemäß einer bevorzugten Ausführungsform des erfindungsgemäßen Verfahrens, wird als Metallgeflecht ein bandförmiges Kupfergeflecht verwendet, dessen Längskanten nach dem Umhüllen des nicht abgeschirmten Kabelendabschnittes miteinander verbunden werden.

Gemäß einer weiteren Ausführungsform des erfindungsgemäßen Verfahrens, wird zum Verbinden der Längskanten ein klebendes Fixiermittel, z.B. Butylkautschuk, Klebestreifen oder Kombinationen dieser, auf wenigstens einer Längskante einseitig aufgetragen.

Gemäß einer anderen Ausführungsform des erfindungsgemäßen Verfahrens, werden die beiden Längskanten des Metallgeflechts beim Umhüllen in eine einander überlappende Stellung gebracht und in dieser fixiert.

Als vorteilhaft hat es sich außerdem herausgestellt, wenn als Klebestreifen ein leitender Kunststoff verwendet wird.

Ferner kann vorgesehen sein, daß ein innen mit einer Heißklebeschicht versehener schrumpffähiger Schlauch oder ein eine leitende und dichte Innenschicht aufweisender schrumpffähiger Schlauch verwendet wird.

Die Abschirmungsüberbrückung der vorliegenden Erfindung läßt sich problemlos nach dem Konfektionieren einer Kabel-Verbinder-Verbindung wie einer Kabel-Stecker-Verbindung auf nicht abgeschirmte Kabelabschnitte aufbringen, sofern ein schrumpffähiger Schlauch in Bereitschaft gehalten wird. Die Schirmung aus einem Kupfergeflecht weist eine hohe Dämpfung auf, ist flexibel und paßt sich der jeweiligen Anwendung, z.B. im Kabeldurchmesser, an. Des weiteren ist es als Grundgeflecht auf dem Markt erhältlich, so daß keine kostenintensiven zusätzlichen Produktionsschritte notwendig sind. Bei der Einwirkung eines äußeren Drucks, z.B. durch einen Schrumpfschlauch, paßt sich das Kupfergeflecht den Konturen des Kabels weitgehend an, ohne daß die Schirmwirkung reduziert wird.

Die Erfindung wird im folgenden anhand von Ausführungsbeispielen unter Bezug auf Zeichnungen näher beschrieben. Es zeigt:
- Fig.1: schematisch eine herkömmliche Kabel-Stecker-Verbindung;
- Fig.2: schematisch einen Teil-Längsschnitt einer Kabel-Stecker-Verbindung nach dem Aufbringen einer erfindungsgemäßen Abschirmungsüberbrückung;
- Fig.3: schematisch einen Teil-Längsschnitt einer Kabel-Stecker-Verbindung mit erfindungsgemäßer Abschirmungsüberbrückung im Endzustand;
- Figuren 4 - 7: schematische Querschnitte durch verschiedene Ausführungsformen der Verbindung der Bandaußenkanten eines bandförmigen Kupfergeflechtes.

Die in Fig. 1 dargestellte herkömmliche Kabel-Stecker-Verbindung besteht aus einem Steckerteil 1, welches mit einem abgeschirmten Kabel verbunden ist. Dabei ist der unmittelbar an das Steckerteil angrenzende Kabelabschnitt 4 nicht abgeschirmt, da in diesem Abschnitt die Schirmung für das Konfektionieren des Steckerteils entfernt worden ist. Das restliche Kabel ist mit einer Schirmung 3 und zum zusätzlichen Schutz mit einem Mantel 2 umgeben. In an sich bekannter Weise ist die metallische Abschirmung mit einer Beilitze 5 versehen.

Die erfindungsgemäße Abschirmungsüberbrückung besteht aus einem Cu-Metallgeflecht, welches entweder als Schlauch- oder Bandmaterial angeliefert wird. Das angelieferte Material wird zunächst auf eine Länge, welche mindestens der Länge 1 des nicht abgeschirmten Kabelabschnittes 4 entspricht, zugeschnitten. Anschließend wird der nicht abgeschirmte Kabelabschnitt 4 mit dem zuvor zugeschnittenen Cu-Geflecht umhüllt. Die Abschirmungsüberbrückung 6 aus Cu-Geflecht liegt zu diesem Zeitpunkt (Fig. 2) noch relativ locker um den Kabelabschnitt 4 herum, so daß sich die Position der Abschirmungsüberbrückung 6 relativ leicht verändern läßt. Um die Abschirmungsüberbrückung in ihrer endgültigen Position zu fixieren, wird sie anschließend von einem schrumpffähigen Schlauch 7 umgeben. Dabei muß die Länge des schrumpffähigen Schlauches 7 so gewählt sein, daß sowohl die Abschirmungsüberbrückung 6 vollständig als auch ein Teil des schon vorhandenen Kabelmantels 2 abgedeckt wird. Vorzugsweise wird ein abgelängter schrumpffähiger Schlauchabschnitt derart in Bereitschaft gehalten, daß er noch vor der Kabelkonfektionierung, d.h. vor dem Anschlagen des Steckerteils auf das Kabel aufgeschoben wird. Die Beilitze 5 wird mit dem Cu-Metallgeflecht in leitende Verbindung gebracht, damit das als Überbrückung dienende Geflecht und die Kabelabschirmung 3 dasselbe elektrische Potential aufweisen. Beim nachfolgenden Erwärmen des Schrumpfschlauchs wird die Abschirmungsüberbrückung in ihrer Position fixiert und mit dem schon abgeschirmten Teil des Kabels fest verbunden. Gleichzeitig mit der Erwärmung des Schrumpfschlauches wird ein äußerer Druck auf die Abschirmungsüberbrückung ausgeübt, unter dem sich das sehr flexible Cu-Geflecht den Konturen des Kabels weitgehend anpassen kann. In Fig. 3 ist eine Kabelsteckerverbindung mit einer Abschirmungsüberbrückung im Endzustand dargestellt.

Die erfindungsgemäße Abschirmungsüberbrückung ermöglicht eine zuverlässige Abschirmung von konfektionierten Kabel-Verbinder-Verbindungen, wie Kabel-Stecker-Verbindungen. Die zu diesem Zweck verwendeten Cu-Geflechte, bestehen aus einem vorgefertigen Band, welches durch Auftrennen eines Geflechtsschlauches gewonnen werden kann. Insbesondere wenn das Band durch Auftrennen eines Geflechtschlauches hergestellt ist, ist es vorteilhaft, daß das Geflecht im Bereich der Schnittkanten zuvor mit einem geeigneten Material fixiert wird. Auf diese Weise kann verhindert werden, daß das Geflecht nach dem Aufschneiden instabil wird und die Kanten "aufbröseln". Ein für diese Anwendung geeignetes Material ist z.B. das in der Patentanmeldung P 38 09 167.4 beschriebene Dualklebeband, ein Laminat aus Butylkautschuk und Heißkleber. Dieses Dualklebeband wird der Länge nach außen oder innen auf den Geflechtschlauch aufgebracht, wobei der Butylkautschuk direkten Kontakt mit dem Geflecht hat, und dieses so stabilisiert. Anschließend wird der Schlauch durch das Dualklebeband hindurch längs aufgetrennt. Die mit dem Dualklebeband versehenen Bandaußenkanten des Cu-Geflechts werden im Einsatz als Längskanten verwendet, deren Butylkautschukschicht ein Verbinden ermöglicht.

Bei der Verarbeitung wird ein Geflechtbandstück um den abzuschirmenden Kabelabschnitt herumgelegt und die beiden Bandaußenkanten werden mit Hilfe des Butylkautschuks miteinander verbunden. Die Abmessungen des verwendeten Geflechtbandstückes werden dabei auf die jeweilige Anwendung abgestimmt. Die Breite des Geflechtbandes sollte wenigstens dem Umfang des Kabels und die Länge wenigstens der Länge 1 des nicht abgeschirmten Kabelabschnittes entsprechen. Dabei hat es sich als vorteilhaft herausgestellt, wenn die Breite des Geflechtbandes so gewählt wird, daß sich die beiden Bandaußenkanten, nachdem das Geflechtbandstück um das Kabel herumgelegt wurde, überlappen. Auf diese Weise kann sichergestellt werden, daß das Geflecht nach der Montage 360^{o} Kontakt hat, und somit vollständig abschirmt.

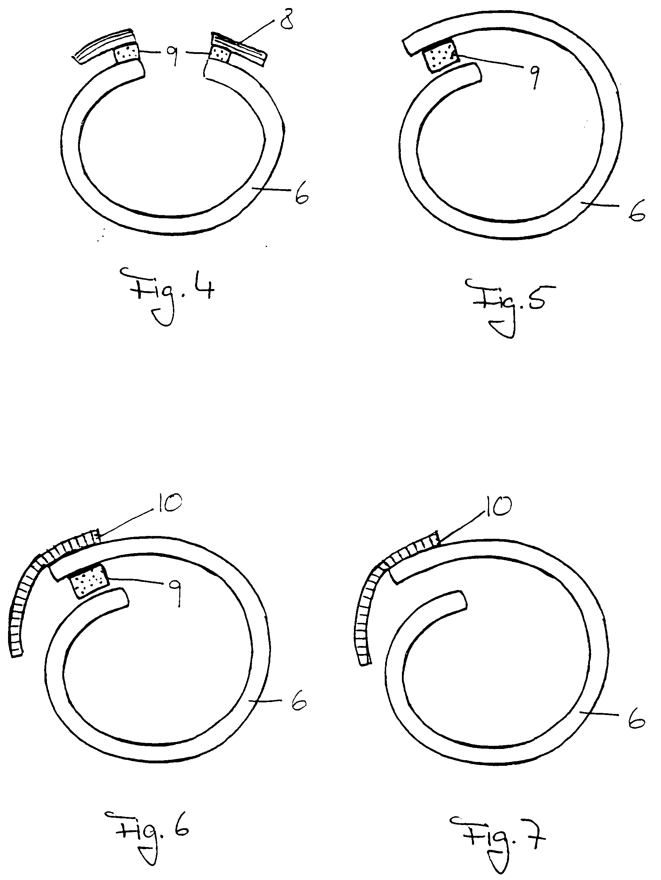

In den Fig. 4 bis 7 sind verschiedene Ausführungsformen zur Verbindung der beiden Bandaußenkanten des Cu-Geflechtbandes dargestellt. Fig. 4 zeigt einen aufgetrennten Geflechtsschlauch, der vor dem Auftrennen mit einem Dualklebeband versehen wurde. Die beiden Längskanten weisen folglich jeweils einen Teil des Dualklebebandes (9, 10) auf.

Bei der Verarbeitung werden die beiden Längskanten zunächst mit Hilfe des Butylkautschuks 9 durch eine Stoßverklebung miteinander zu einem rohrförmigen Gebilde verbunden. Bei der nachfolgenden Umhüllung des rohrförmigen Gebildes mit Schrumpfschlauch und der beim Rückschrumpfen desselben auftretenden Erwärmung wird auch der Heißkleber 8 des Dualklebebandes verflüssigt, wodurch die Verbindung zusätzlich verklebt wird. Bei den in Fig. 5, 6 und 7 dargestellten Ausführungsformen werden die sich überlappenden Bandaußenkanten zusätzlich durch den Einsatz geeigneter Materialien, z.B. eines streifenförmigen Butylkautschukwulstes 9 (Fig. 5), eines Klebestreifens 10 (Fig. 7) oder einer Kombination aus beiden (Fig. 6), verbunden. Diese Materialien können entweder zwischen die sich überlappenden Bandaußenkanten oder auf den Übergang Bandaußenkante Geflechtband aufgetragen werden.

Bei den obenbeschriebenen Ausführungsformen ist es möglich, zur zusätzlichen Sicherung einer allseitig geschlossenen Abschirmung, einen leitenden Kunststoff als Klebstoff zu verwenden. Auch der Einsatz eines Schrumpfschlauches mit einer leitenden und dichtenden Innenschicht kann zu diesem Zweck eingesetzt werden.

## Patentansprüche

1. Abschirmungsüberbrückung (6) für nicht abgeschirmte Kabelendabschnitte (4) einer Kabel-Verbinder-Verbindung, wie einer Kabel-Stecker-Verbindung,
dadurch **gekennzeichnet,**
daß dieser nicht abgeschirmte Kabelendabschnitt (4) über seine gesamte Länge mit einem elektrisch 360^{o} abschirmenden Metallgeflecht umgeben ist.

2. Abschirmungsüberbrückung (6) nach Anspruch 1, dadurch gekennzeichnet, daß das Metallgeflecht aus einem bandförmigen Kupfergeflecht besteht, dessen Längskanten miteinander verbunden sind.

3. Abschirmungsüberbrückung (6) nach Anspruch 2, dadurch gekennzeichnet, daß die Längskanten mit Hilfe eines auf wenigstens einer Längskante einseitig aufgetragenen klebenden Fixiermittels, wie Butylkautschuk (9), verbunden sind.

4. Abschirmungsüberbrückung (6) nach Anspruch 1 bis 3, dadurch gekennzeichnet, daß die Abschirmungsüberbrückung (6) und der angrenzende abgeschirmte Kabelabschnitt von einem aufgeschrumpften Schlauchmaterial umgeben sind.

5. Verfahren zur Montage einer Abschirmung auf nicht abgeschirmte Kabelendabschnitte (4) einer Kabel-Verbinder-Verbindung, wie einer Kabel-Stecker-Verbindung,
**gekennzeichnet durch** die
folgenden Schritte:
- Zuschneiden eines Metallgeflechts;
- Umhüllen des nicht abgeschirmten Kabelendabschnittes (4) mit dem als Abschirmungsüberbrückung (6) dienenden Geflecht;
- Umgeben des Geflechts mit schrumpffähigem Schlauch (7); und
- Rückschrumpfen des schrumpffähigen Schlauches.

6. Verfahren nach Anspruch 4, dadurch gekennzeichnet, daß als Metallgeflecht ein bandförmiges Kupfergeflecht verwendbar wird, dessen Längskanten nach dem Umhüllen des nicht abgeschirmten Kabelendabschnittes (4) miteinander verbunden werden.

7. Verfahren nach Anspruch 4, dadurch gekennzeichnet, daß zum Verbinden der Längskanten ein klebendes Fixiermittel, z.B. Butylkautschuk (9), Klebestreifen (10) oder Kombinationen dieser auf wenigstens eine Längskante einseitig aufgetragen wird.

8. Verfahren nach Anspruch 5, dadurch gekennzeichnet, daß beim Umhüllen die beiden Längskanten des Metallgeflechts in eine einander überlappende Stellung gebracht und in dieser fixiert werden.

9. Verfahren nach Anspruch 6, dadurch gekennzeichnet, daß als Klebestreifen (10) ein leitender Kunststoff verwendet wird.

10. Verfahren nach Anspruch 4, dadurch gekennzeichnet, daß ein innen mit einer Heißkleberschicht versehener schrumpffähiger Schlauch verwendet wird.

11. Verfahren nach Anspruch 4, dadurch gekennzeichnet, daß ein eine leitende und dichte Innenschicht aufweisender schrumpffähiger Schlauch verwendet wird.
